# EUROPEAN PATENT APPLICATION

(11) **EP 1 817 957 A1**
(43) Date of publication of application: **15.08.2007**
(21) Application number: 07100566.4
(22) Date of filing: 15.01.2007
(51) Int. Cl.: A01K 31/14

(54) **Nesting box for birds**

(30) Priority: 09.02.2006 NL 1031113; 02.09.2006 NL 1032415
(71) Applicant: Widee B.V., 7775 AC Lutten (NL)
(72) Inventor: De Wilde, Gerrit Jan, 7788 AH, Anerveen (NL)
(74) Representative: Schumann, Bernard Herman Johan

(57) **Abstract**

A nesting box for birds comprises a front wall with an entrance aperture, a rear wall, a bottom, a roof and mounting means for mounting the nesting box on a support construction.

The front wall has an opening with which one of a group of plate-like elements can selectively co-act, each of which elements has an entrance aperture with dimensions specific to a determined category of birds, which entrance apertures of the different elements have mutually differing dimensions and can thus allow passage of birds of differing dimensions.

A marking relating to the dimensions of the relevant entrance aperture is added at each entrance aperture such that the marking is visible from the outside via the opening or via a second opening.

## Description

The invention relates to a nesting box for birds, comprising:
a front wall with an entrance aperture;
a rear wall;
a bottom;
a roof; and
mounting means for mounting the nesting box on a support construction;
which front wall has an opening with which one of a group of plate-like elements can selectively co-act, each of which elements has an entrance aperture with dimensions specific to a determined category of birds, which entrance apertures of the different elements have mutually differing dimensions and can thus allow passage of birds of differing dimensions.

Such a nesting box with entrance aperture is for instance known from GB-A-2 040 662. This known nesting box comprises a front wall with an entrance aperture in which annular reducing pieces can be placed. Without the use of an annular reducing piece the round entrance aperture has its maximum diameter. The effective diameter can be reduced by placing an annular reducing piece in the entrance aperture. A subsequent annular reducing piece can be arranged in an already arranged reducing piece such that the diameter is decreased still further. The effective diameter of the entrance aperture can thus be chosen as desired, whereby birds of different sizes can be allowed through.

GB-A-2 182 535 relates to a nesting box with a generally partly cylindrical housing with a longitudinal opening, in which housing fits a cylinder which is provided with a number of entrance apertures of various dimensions. By rotating this cylinder relative to the aperture in the housing it is possible to select an entrance aperture of a desired dimension.

It is an object of the invention to provide a nesting box for birds, wherein it can be established from outside for which category of birds the nesting box is adapted at that moment.

The invention provides for this purpose a nesting box of the type specified in the preamble, which has the feature that
a marking relating to the dimensions of the relevant entrance aperture is added at each entrance aperture; and
the opening in the front wall has a form such that, after a chosen element has been placed in position, the entrance aperture is free relative to the opening in the front wall and the marking is visible from the outside via the opening or via a second opening.

The nesting box can be embodied such that the mounting means are arranged on the rear wall;
the rear wall supports the roof; and
the bottom and the front wall are supported for sliding in and out by the roof.

This latter embodiment preferably has the feature that the rear wall and the roof are assembled into an integral unit.

The nesting box can also have the special feature that the bottom and the front wall are assembled into an integral unit.

With a view to a desired thermal insulation, the nesting box can have the special feature that the roof takes a double-walled form.

The nesting box can also have the feature that the front wall and/or the rear wall take a double-walled form.

It will be apparent that, with such an embodiment, the interior of the nesting box is relatively cool in summer and relatively warm in winter.

According to yet another aspect of the invention, the nesting box has the special feature that the bottom and/or the roof have a prismatic form. "Prismatic" is understood to mean a form which has the same cross-section at any axial position.

This latter embodiment can be practically embodied such that the bottom and/or the roof consist of plastic and are manufactured by extrusion.

Particularly in the case where the possibly extruded roof has a double-walled form, the nesting box preferably has the special feature that the front edge and the rear edge of the roof are covered by respective edge trims. The edge trim on the rear side can be a separate element or form part of the rear wall. This is particularly practical in the case where the rear wall and the roof are assembled into an integral unit.

Practical and inexpensive is an embodiment in which at least one of the front wall, the rear wall, the bottom and the roof are embodied in plastic. The plastic can advantageously be of the type which can be readily injected moulded and/or extruded. The plastic can optionally be reinforced, whereby the impact resistance is for instance improved relative to that of unreinforced plastic.

Through the use of plastic in at least the area of the entrance aperture and the opening in the front wall it is not possible for larger birds to make these openings larger. It is a regular occurrence where wood is used that woodpeckers attempt to do this. The use of plastic thus prevents undesired, or at least unintended, birds from entering the nesting box.

In order to prevent as far as possible degradation and discolouring of the plastic under the influence of ultraviolet radiation, the nesting box can have the special feature that at least the outer surfaces of the nesting box are embodied in plastic which is resistant to ultraviolet radiation.

In a determined embodiment the nesting box can advantageously have the special feature that the plastic is ASA. ASA is a plastic which is comparable to ABS but has a better weather resistance.

A nesting box can particularly have the special feature that the material thickness amounts to about (2.0 ± 0.5) mm. A relatively light but nevertheless strong construction is hereby realized. The mechanical strength and form stability can be improved even further by the use of strengthening ribs.

In a determined embodiment the nesting box has the special feature that the entrance aperture has a circular shape.

In another embodiment the nesting box has the feature that the entrance aperture has an oval shape.

It is pointed out that the entrance apertures can be arranged in separate plate-like elements. As a combination of the above stated aspects, three circular entrance apertures of diverse dimensions can for instance be applied, in combination with an oval opening. Practically all small birds can hereby be accommodated by bird-lovers.

In a practical embodiment the nesting box has the special feature that the entrance apertures have maximum linear dimensions in the range of about 25-50 mm.

The nesting box can particularly be provided with three elements, wherein said dimensions amount to 28 mm ± 10%, 35 mm ± 10% and 40 mm ± 10%. A fourth element with an oval opening can optionally be added hereto.

A practical embodiment has the special feature that a marking designates the maximum linear dimensions of the relevant entrance aperture. The diameter of a round entrance aperture can for instance be designated in millimetres or centimetres.

As alternative to or in combination herewith, the nesting box can have the special feature that a marking comprises a designation of the relevant category of birds.

Very simple to assemble is a nesting box in which at least a number of relevant components are mutually coupled by snap connections.

A preferred embodiment has the special feature that an outlet for rainwater connects to the bottom.

According to a specific aspect of the invention, the nesting box has the feature that the inner surface of at least the bottom is smooth. Surprisingly, it has been found that, when the inner wall is smooth, the young stay in the nest longer and only leave the nesting box when they can really fly.

According to yet another aspect of the invention, the nesting box has the special feature that the rear wall and the roof are assembled into an integral roof unit, the bottom and the front wall are assembled into an integral bottom unit, and the bottom unit can be locked releasably relative to the roof unit. Due to this releasable locking predators such as squirrels and cats cannot open the nesting box, which increases the safety of the birds present in the nesting box.

In some circumstances it may be wished to open the nesting box for a short time for inspection, for instance in order to check whether birds are present therein, cleaning operations must be carried out, the birds have laid eggs and whether sufficient water and feed is present, and the like. When the nesting box is opened it is of course necessary to avoid birds possibly present in the nesting box being frightened, flying away and possibly never returning. In this respect the nesting box can be provided with a more or less rigid gauze mesh which connects to both side edges of the bottom and to the edge of the front wall extending thereabove, and which has a form corresponding to the form of the inner surface of the roof.

In an alternative embodiment, in which the nesting box can likewise be opened for a short time for inspection or other purposes, the nesting box has the special feature that the rear wall supports an inner plate of the roof, this inner plate having on its front side a cut-away part through which a nesting box attendant can place a hand after sliding the bottom, the front wall and said inner plate forward a certain distance relative to the roof and the rear wall in order to access the interior of the nesting box.

According to yet another aspect of the invention, the nesting box can have the special feature that the bottom comprises a feed dish and can thus serve as feeder board, wherein the front wall is omitted.

It is desirable that the nesting box can be mounted on the most varying support constructions without additional provisions, such as special attachments, being necessary for this purpose. In this respect the nesting box can have the special feature that the mounting means comprise:
two mutually parallel vertical ribs on the outer surface of the rear wall; and
a mounting plate which extends over these ribs and which has at least one continuous hole, is connected to the rest of the rear wall with its horizontal bottom and top edges in the areas outside the ribs, wherein the area inside the ribs of at least the bottom edge is clear and defines a horizontal gap-like passage, and wherein the vertical side edges are clear and define two vertical gap-like passages.

An embodiment in which the mounting plate forms part of the rear wall has a simple structure and is therefore cheap to manufacture.

In another embodiment the nesting box has the special feature that the mounting means comprise at least two holes which are located at a mutual distance and which each comprise a relatively wide lower part and a relatively narrow upper part, such that for instance the head of a screw can only pass through the wide part and the shank fits in the narrow part, and the nesting box can thus be supported by two screws.

At least a number of components of the nesting box are preferably manufactured by injection moulding of plastic.

According to yet another, wholly different aspect of the invention, the nesting box preferably has the special feature that the front wall has a form corresponding with a vertical side view of an egg, wherein the lower zone is substantially bounded by a semicircle and the upper zone is substantially bounded by a semi-oval.

According to yet another aspect of the invention, the nesting box has the feature that the elements are separate components, have the same outer dimensions and support means are added to the opening for supporting an element.

In a practical alternative embodiment, wherein the elements are connected to the nesting box and cannot therefore go missing or otherwise be lost, the nesting box has the special feature that the elements are embodied together as one integral unit which is disposed rotatably relative to the front wall such that a nesting box attendant, by rotating the unit, can select an entrance aperture with the associated marking.

The nesting box of the above stated type, in which the inner plate has a cut-away part, can advantageously have the special feature that a cover hingedly coupled to the inner plate is added to the cut-away part, which cover can be lifted after sliding the bottom, the front wall and the inner plate forward over said certain distance. With this embodiment said unit, comprising the bottom, the front wall, the inner plate and the cover, can first be slid forward, whereafter the nesting box attendant can open the cover carefully so as to access the interior of the nesting box.

The above described embodiment preferably has the special feature that the cover is at least partially transparent. With this latter embodiment the attendant, prior to opening the cover, can first observe the situation in the nesting box before opening the cover and carrying out the necessary actions, for instance removing from the nesting box or placing therein one or more birds, eggs, feed, waste, ground cover or the like.

The invention will now be elucidated with reference to the accompanying drawings of several random exemplary embodiments. In the drawings:
Figure 1 shows a front view of a nesting box;
Figure 2 shows a side view of the nesting box;
Figure 3 shows a perspective view of the nesting box;
Figure 4 shows a perspective view corresponding with figure 3 of the nesting box in the situation where the front wall and the bottom have been slid some distance outward;
Figure 5 is a view corresponding with figure 4 wherein the plate with the selection opening is drawn in two different positions;
Figure 6 is a view corresponding with figures 4 and 5 of a variant with a gauze mesh, wherein the outer plate of the double-walled front wall is omitted in order to show the support means for the selection plate;
Figure 7 is a view corresponding with figure 6 of the variant according to figure 6, in which the outer plate of the front wall is drawn;
Figure 8 shows a perspective view of the roof which is assembled into a unit with the rear wall;
Figure 9 shows a detail on enlarged scale of the rear side of the bottom, which is fastened releasably to the rear wall by means of a snap lip;
Figure 10 shows a rear view of the nesting box with mounting means;
Figure 11 is a perspective view of the nesting box, in which the mounting means according to figure 10 are shown;
Figure 12 is a view corresponding with figure 11 of the situation in which the nesting box is mounted on a pole;
Figure 13 shows a view corresponding with figure 11 of an embodiment in which the nesting box can be connected to a pole, a tree or another vertical carrier by means of a band-like flexible ring;
Figure 14 shows a perspective view of a nesting box wherein the use of a front wall is dispensed with and the bottom has the form of a tray;
Figure 15 shows a variant corresponding functionally with figure 14, wherein the bottom comprises a feed tray and a drink tray;
Figure 16 shows a perspective view of the bottom, the front wall and the inner plate of the roof in a subsequent embodiment;
Figure 17 shows a view corresponding with figure 16 of the bottom with the front wall;
Figure 18 is a perspective view of the roof with the rear wall as seen from the front;
Figure 19 is a perspective view of the roof with the rear wall as seen from the rear;
Figure 20 shows the outer plate of the bottom and the outer plate of the front wall in perspective view;
Figure 21 shows a top view of the bottom with drainage outlets which are also snap elements;
Figure 22 shows a rear view of the roof plate;
Figure 23 shows a top view of the roof plate with sliding rib;
Figure 24 shows a side view of the roof plate with sliding rib;
Figure 25 is a perspective view from the rear of the roof plate with sliding rib;
Figure 26 is a perspective view from the front of the roof plate with sliding rib;
Figure 27 is a perspective view of the outer roof plate;
Figure 28 is a front view of the inner plate of the front wall;
Figure 29 is a top view of the outer plate of the bottom;

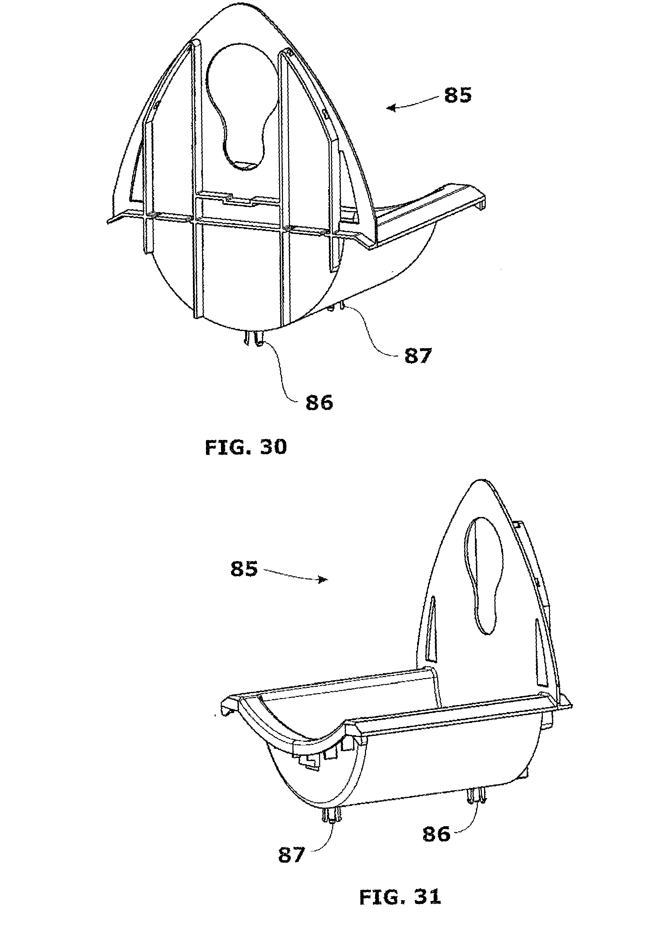

Figure 30 is a perspective view of the bottom unit with the inner plate of the front wall, as seen from the front;

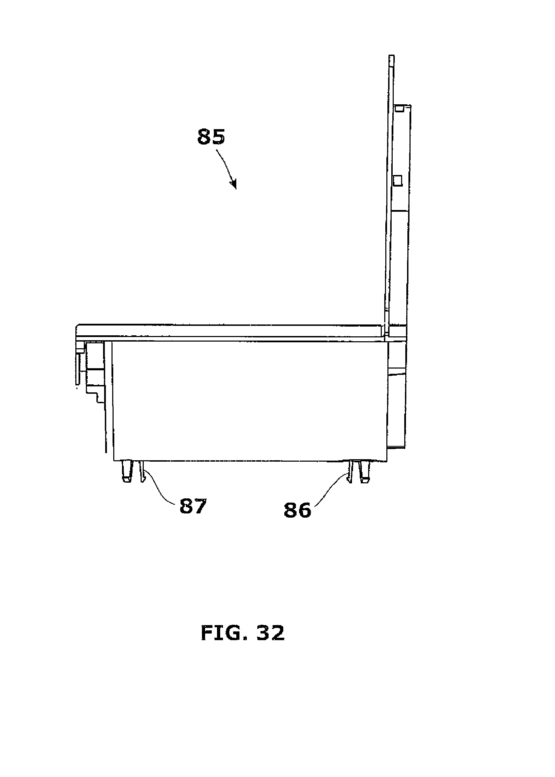

Figure 31 shows the unit according to figure 30 as seen from the rear;
Figure 32 shows a side view of the same unit;
Figure 33 shows a perspective view from the front of the inner plate of the roof with sliding rib;
Figure 34 shows the unit according to figure 33 as seen from the rear;
Figure 35 is a perspective view of the overall nesting box in opened position;
Figure 36 shows the unit comprising the rear plate and the inner roof plate, to which is added a cover which can be hingedly connected thereto;
Figure 37 shows the unit according to figure 36 in assembled situation;
Figure 38 shows the cover as seen at an angle from front right;
Figure 39 shows the cover as seen at an angle from rear left;
Figure 40 shows the cover as seen from below; and
Figure 41 shows the cover as seen from above.

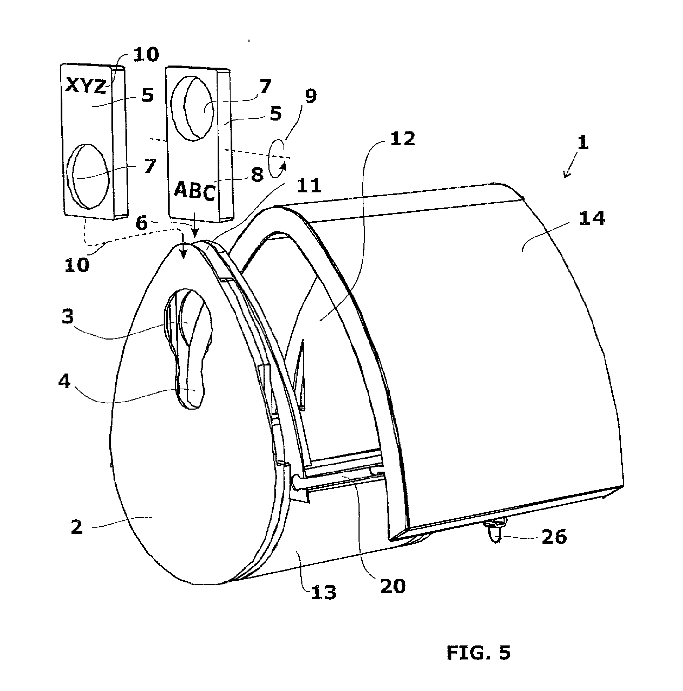

The figures show a nesting box 1 for birds, comprising a front wall 2 with two mutually connecting entrance apertures 3, 4. As figure 5 shows, opening 3 is larger than opening 4. By means of support means to be described hereinbelow a selection plate 5 can be pushed, in the position shown in figure 5, as according to an arrow 6 into double-walled front wall 2, in which support means are present, such that the continuous hole 7 present in selection plate 5 is placed into register with the large entrance aperture 3. Via the smaller entrance aperture 4 the text 8, designated symbolically with ABC, can in this situation be seen through entrance aperture 4. The word ABC corresponds to the name of a type of bird which can pass through opening 3 and opening 7.

Thus is achieved that, by placing selection plate 5, the correct opening is selected and the name of the relevant bird type is visible.

By rotating selection plate 5 through 180° as according to round arrow 9 the selection opening moves to the underside and the text 10 XYZ, corresponding to the name of a different type of bird, becomes visible on the upper side. By inserting selection plate 5 into entrance slot 11 of front wall 2 in this position, entrance aperture 5 is kept open via hole 7 and the name XYZ of the other (smaller) type of bird becomes visible through entrance aperture 3.

The manner in which said support means can be embodied will be described hereinbelow.

Nesting box 1 further comprises a rear wall 12, a bottom 13, a roof 14 and mounting means to be described hereinbelow for mounting nesting box 1 on a support construction.

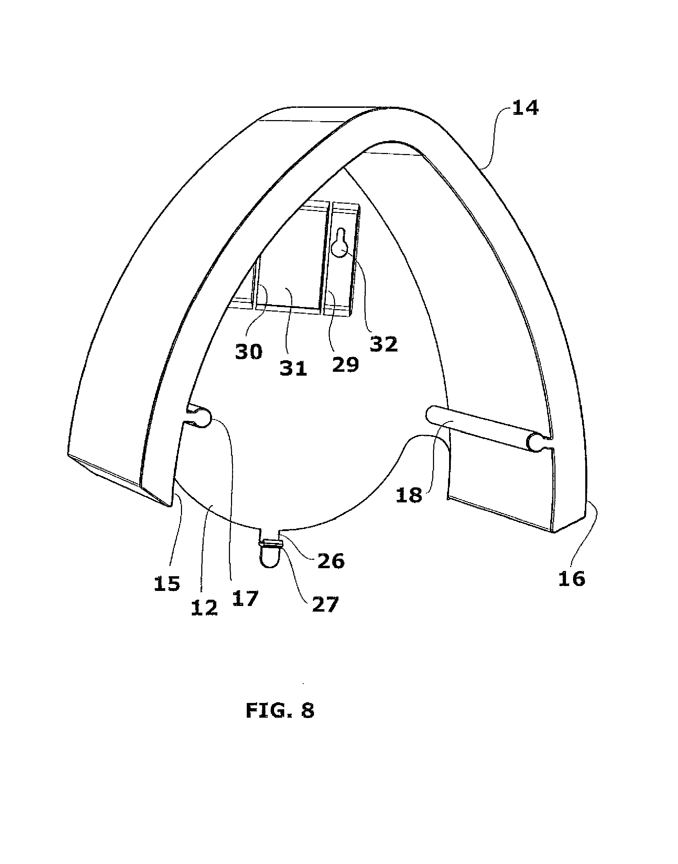

As shown in figures 8, 9, 10, 11, 12 and 13, the mounting means are arranged on the rear wall. The rear wall is therefore connected to a support construction. In the drawn embodiments the roof is assembled into a unit together with the rear wall. Figure 8 shows this particularly clearly.

Figure 8 shows, among others, that inner plate 15 of roof 14, which also has an outer plate 16, is provided with two ribs 17, 18 which are widened on their free end zone. These ribs are placed symmetrically relative to the unit 12, 14, which is otherwise also embodied wholly symmetrically, and serve for slidable guiding of undercut longitudinal grooves 19, 20 which are present on bottom 13 and which can co-act slidably with ribs 17, 18 respectively. Bottom 13 is thus slidable relative to the roof.

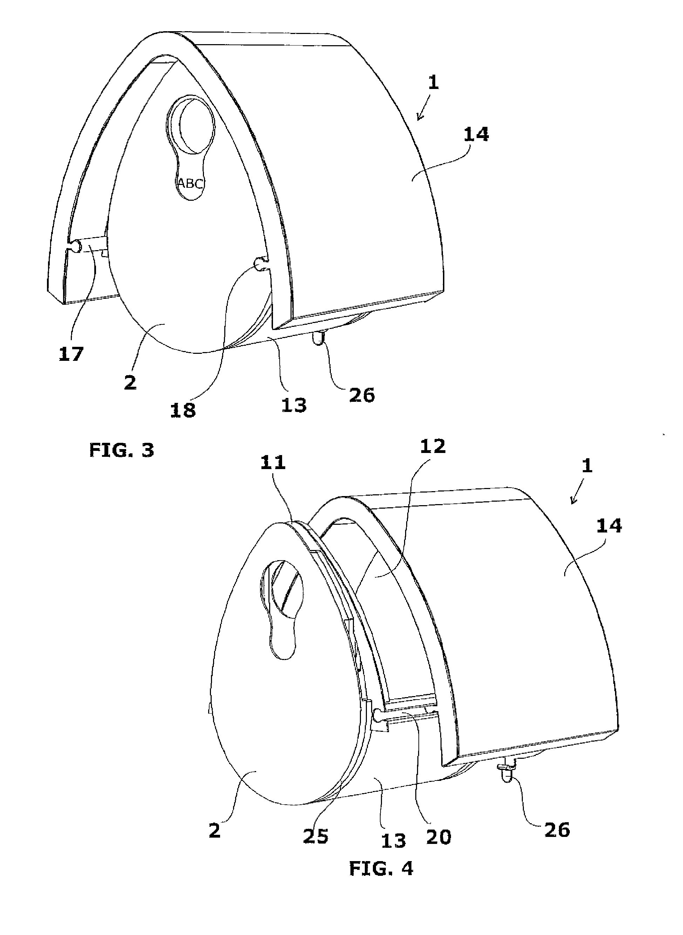

As figure 4 for instance shows, bottom 13 also supports front wall 2. A comparison between Figures 3 and 4 shows that the form of front wall 2 corresponds to the form of inner plate 15 of roof 14, thereby ensuring a good, more or less sealing connection. This enhances the windproofness of nesting box 1, and thereby the comfort of the birds.

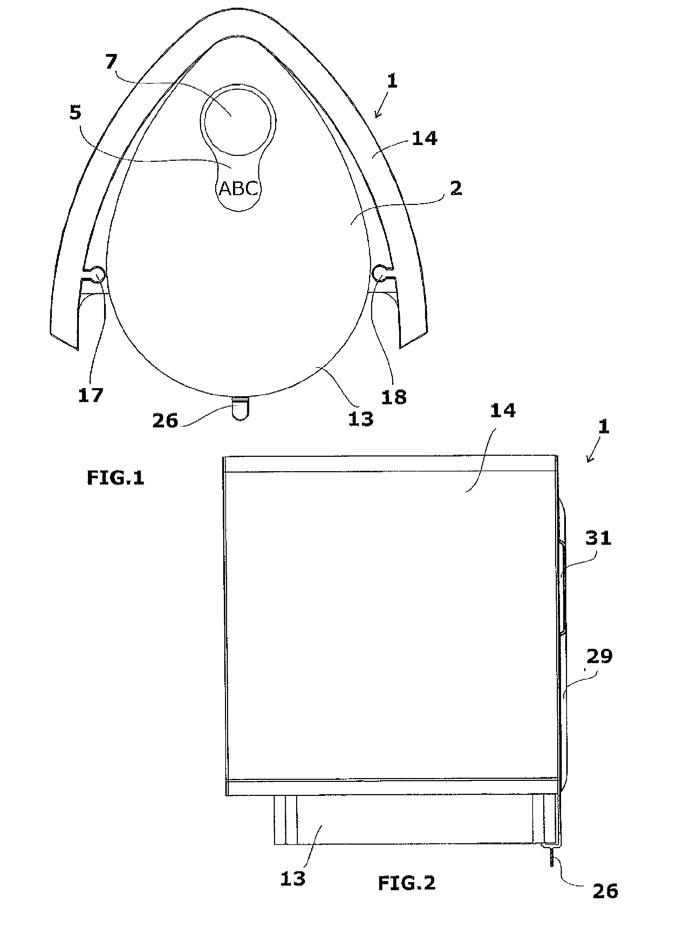

Attention is drawn to the fact that front wall 2 has the general shape of an egg, as can be seen particularly clearly in figure 1. Confidential research has shown that this aspect is greatly appreciated by potential users.

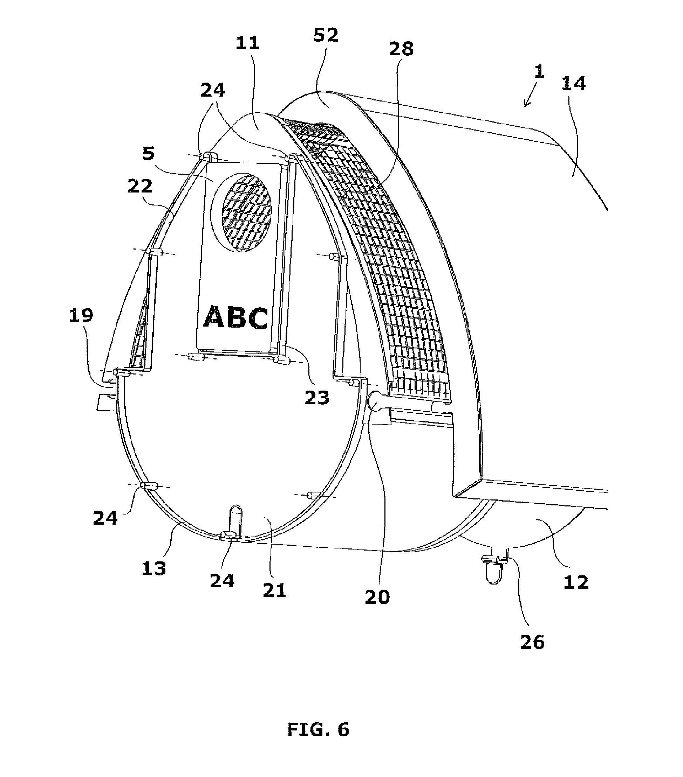

Figure 6 shows the internal construction of front wall 2. The shown inner plate 21 thereof comprises a peripheral upright edge 22, a recessed part 23 of which connects to entrance slot 11 and is formed such that it can accommodate selection plate 5 in the manner shown in figure 6. Front plate 2 can be connected with outer plate 25 to inner plate 21 by means of pins 24, which can co-act with blind holes present on outer plate 25 of front wall 2, whereby recessed part 23 forms the support means for selection plate 5.

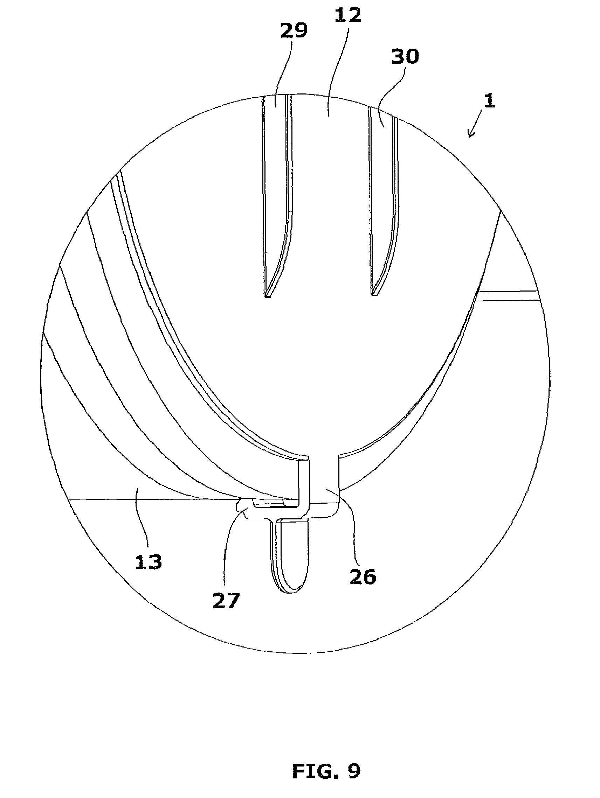

Present on the underside of rear wall 12 is a resilient tongue 26 which, in the manner shown particularly clearly in figure 9, can co-act in locking manner, using a snap edge 27, with a recess on the outer side of bottom 13 such that unintended outward sliding of bottom 13 relative to roof 14 is effectively prevented.

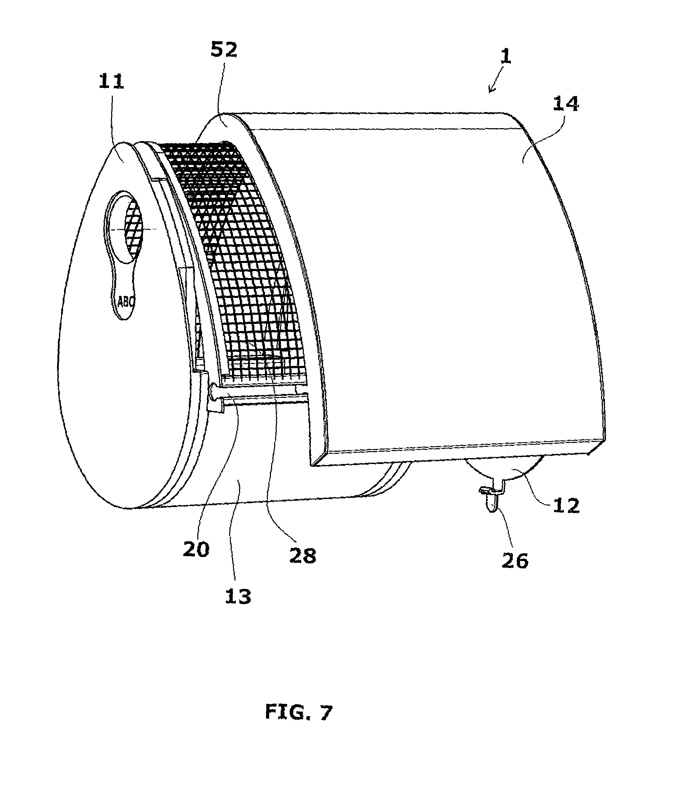

Figures 6 and 7 show a more or less rigid gauze mesh 28 which connects to both side edges of bottom 13 and to the edge of front wall 2 protruding thereabove, and has a form corresponding with the form of inner plate 15.

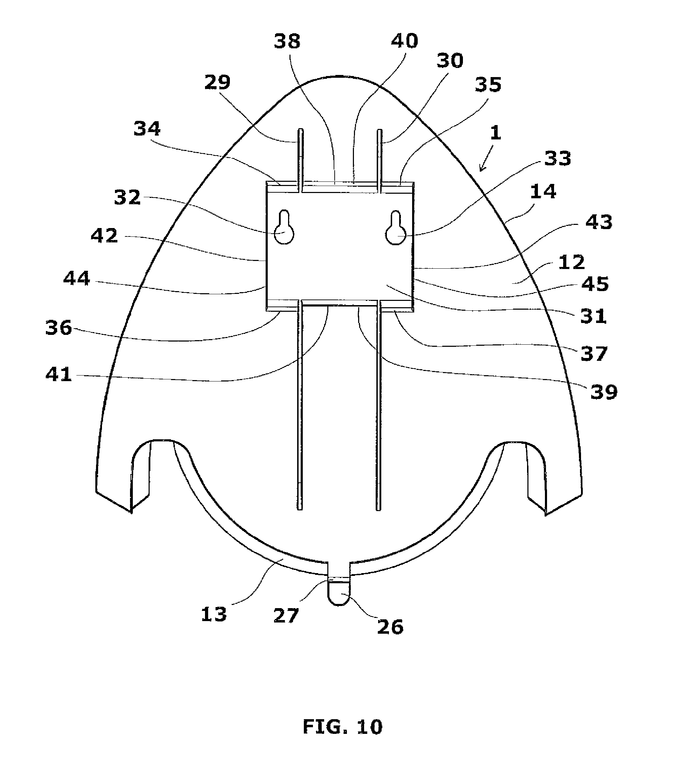

As figure 10 shows particularly clearly, rear wall 12 is provided with mounting means for mounting the whole nesting box on a support construction. These mounting means comprise two mutually parallel vertical ribs 29, 30 extending on the outer surface of rear wall 12, and a mounting plate 31 which extends over these ribs and which has two continuous holes 32, 33, and is connected outside ribs 29, 30 to the rest of rear wall 12 with its horizontal lower and upper edges in the areas 34, 35; 36, 37, wherein the area inside ribs 29, 30 of both upper edge and lower edge 38, 39 respectively is clear and thus defines a top and a bottom horizontal gap-like passage 40, 41 respectively, and wherein the vertical side edges 42, 43 are clear and thus define two vertical gap-like passages 44, 45 respectively.

As can be seen particularly clearly in figure 8, roof 14 has a double-walled form and is manufactured by means of extrusion. The roof thus has a prismatic form, i.e. the cross-section is the same at any longitudinal position. Inner plate 15 and outer plate 16 are mutually connected in known manner by integrally co-moulded connecting ribs.

As shown clearly in for instance figures 6 and 7, the open front side of roof 14 is covered with a roof trim 52.

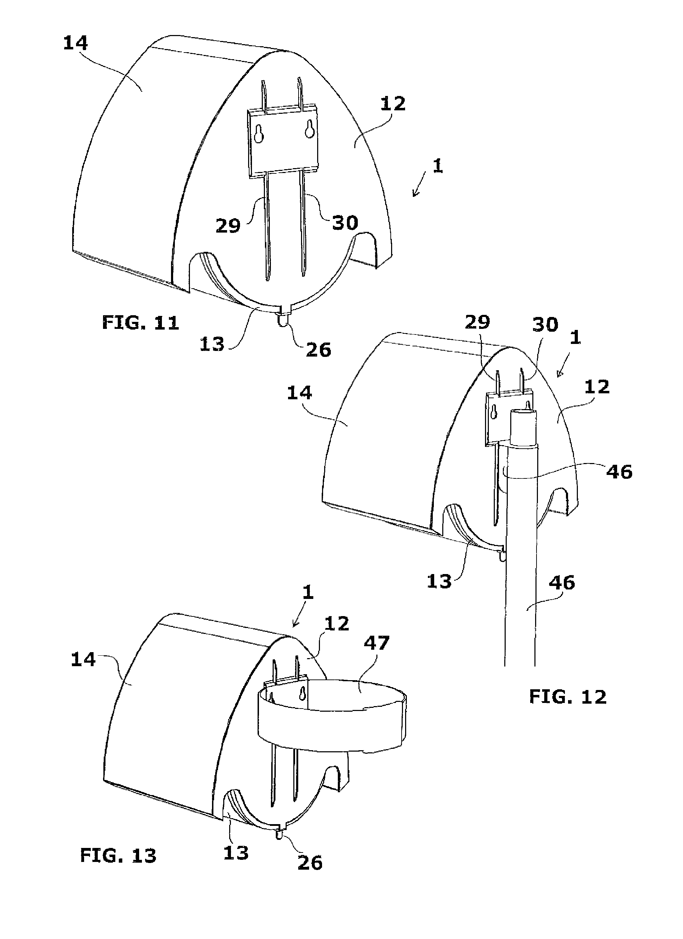

Figure 11 shows the configuration described with reference to figure 10 on smaller scale and in perspective view.

Figure 12 shows that nesting box 1 can be supported by a pole 46 which is provided with a protrusion 46 which fits between ribs 29, 30 and which carries on its free end surface an upward extending mounting plate (not shown) which fits between ribs 29, 30 and fits in passage 41.

With this construction nesting box 1 can in one movement be arranged on and removed from the pole 46 provided with protrusion 46 with the mounting plate.

Figure 13 shows that an annular band 47 can be arranged for instance around a tree or a pole and can extend through passages 44, 45 of mounting plate 31.

It will be apparent that holes 32, 33 are suitable for hanging nesting box 1 in the stable position on for instance a wall by means of nails, screws, hooks or other suitable provisions.

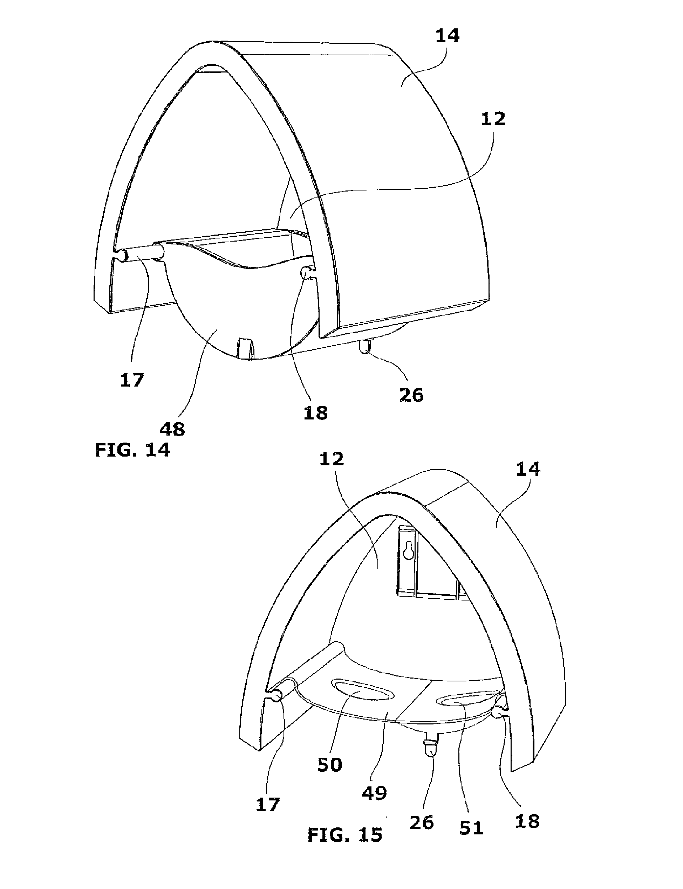

Figures 14 and 15 show that the nesting box can also be used without front wall. In this embodiment the rear wall 12 with roof 14 support in figures 14 and 15 respectively a dish-like bottom 48 and a bottom 49 which is provided with two dishes 50, 51, which can for instance serve as respectively feed dish and drinking dish for birds.

The embodiments of figures 14 and 15 are highly suitable to serve as feeder board and/or as aviary box.

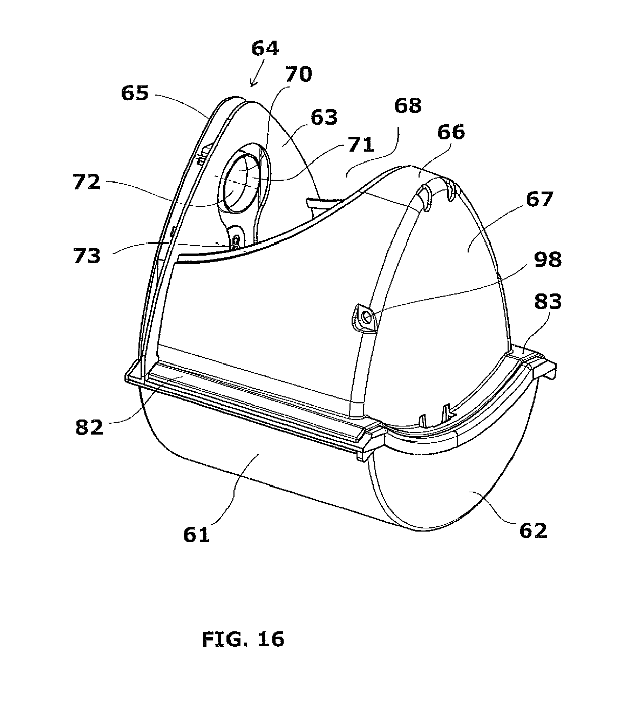

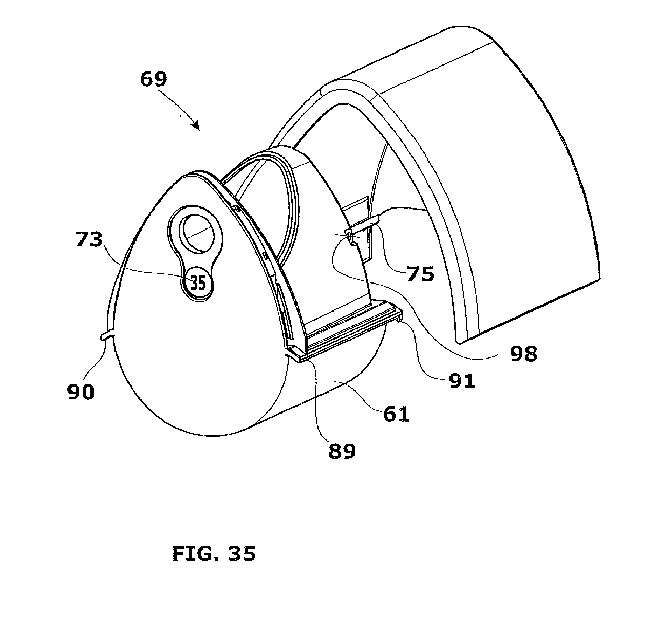

Figure 16 shows a more or less semi-cylindrical bottom 61 which is closed at its rear by a vertical, crescent-shaped plate 62. At its front the bottom 61 is closed by inner plate 63 of front wall 64, which also comprises an outer plate 65. An inner roof plate 66, which is closed at its rear by a vertical plate 67, has a recess 68 through which the nesting box attendant can place a hand after sliding the bottom, the front wall and the inner roof plate some distance out of the unit comprising the rear wall and the roof. For this see for instance figure 35, which shows nesting box 69 in disassembled situation thereof.

Plates 63 and 65 both have a continuous opening 70. Placed between the two is a plate-like element 71 in which an entrance aperture 72 of a specific diameter is recessed. Element 71 is manufactured by injection moulding and comprises a front wall with a thickness in the order of 2 mm, four peripheral wall parts of the same thickness and a bush defining an entrance aperture 72.

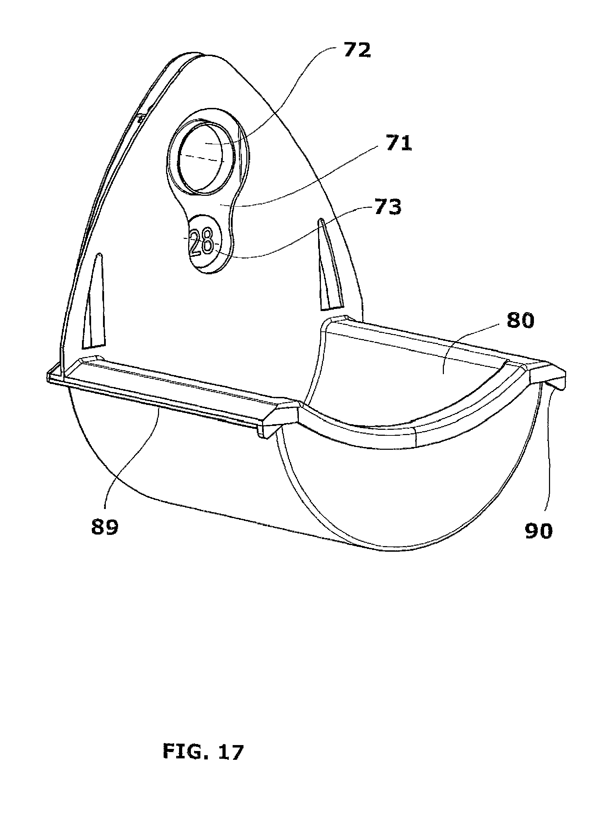

Figure 17 shows that opening 70 comprises a wide upper part and a relatively narrow lower part. Entrance aperture 72 is situated in the area of the relatively wide upper part, and a marking 73 is situated in the area of the lower part such that a user can see from the outside which entrance aperture he has selected. In the embodiment of figure 17 the plate-like element 71 has a marking on both sides.

It is noted that the shown marking is designated with reference numeral 73. In this example the diameter of the hole is 28 mm, which is indicated in the marking. In figure 35 the marking 73 indicates for instance a diameter of 35 mm.

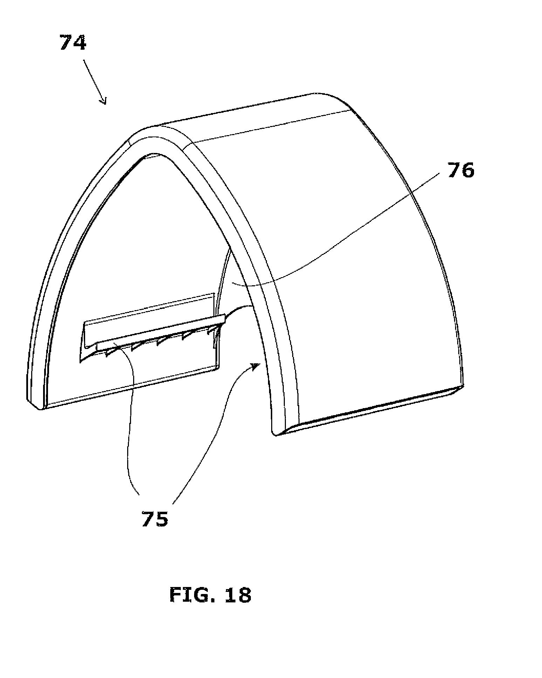

Figure 18 shows roof 74 which carries longitudinal ribs 75 on both its inner sides. The roof has an outer plate 76 on its rear side.

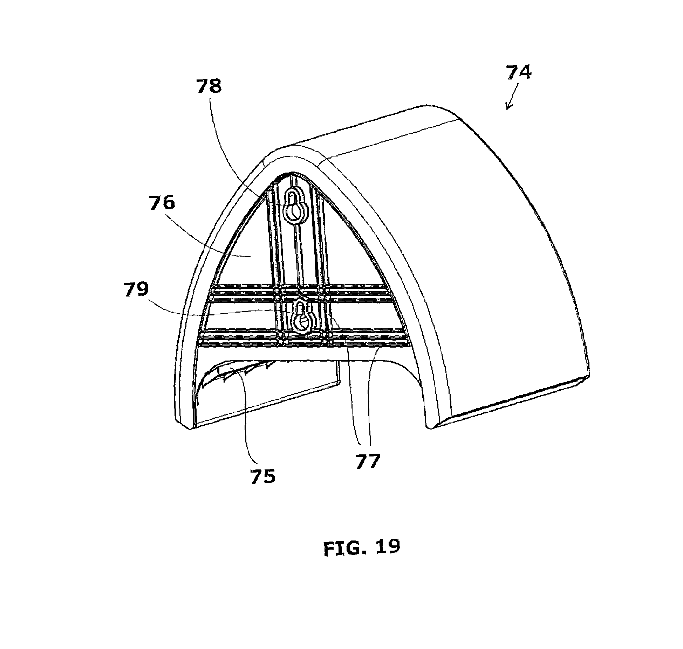

Figure 19 shows that outer plate 76 is provided with a pattern of strengthening ribs 77. Plate 76 also has two generally keyhole-shaped holes 78, 79. Owing to their shown shape they can very suitably be used to hang nesting box 79 on screws via outer plate 76.

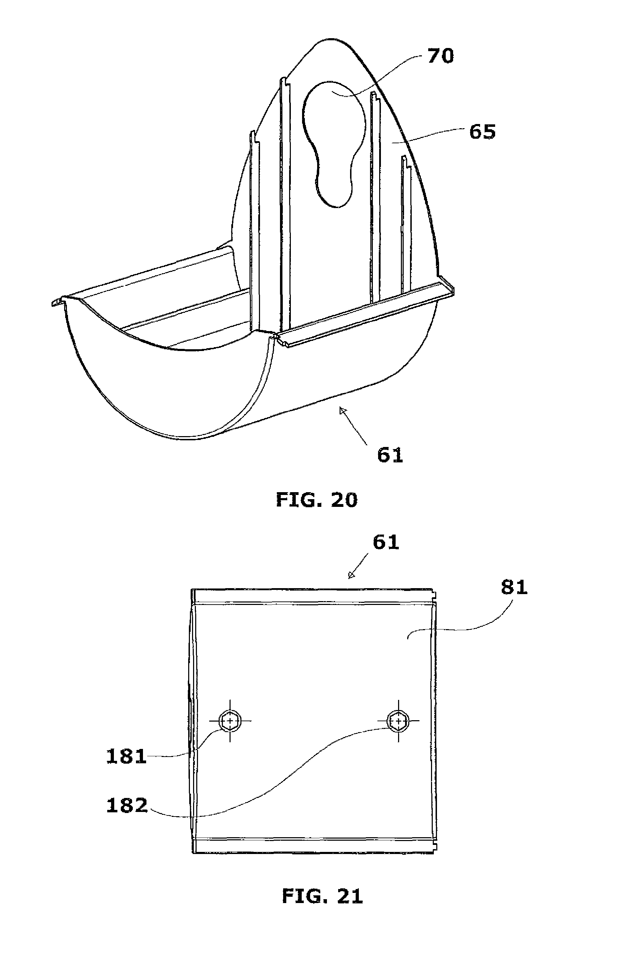

Figure 20 shows bottom 61 with outer plate 65.

Figure 21 shows that inner plate 81 of bottom 61 has two drainage holes 181, 182.

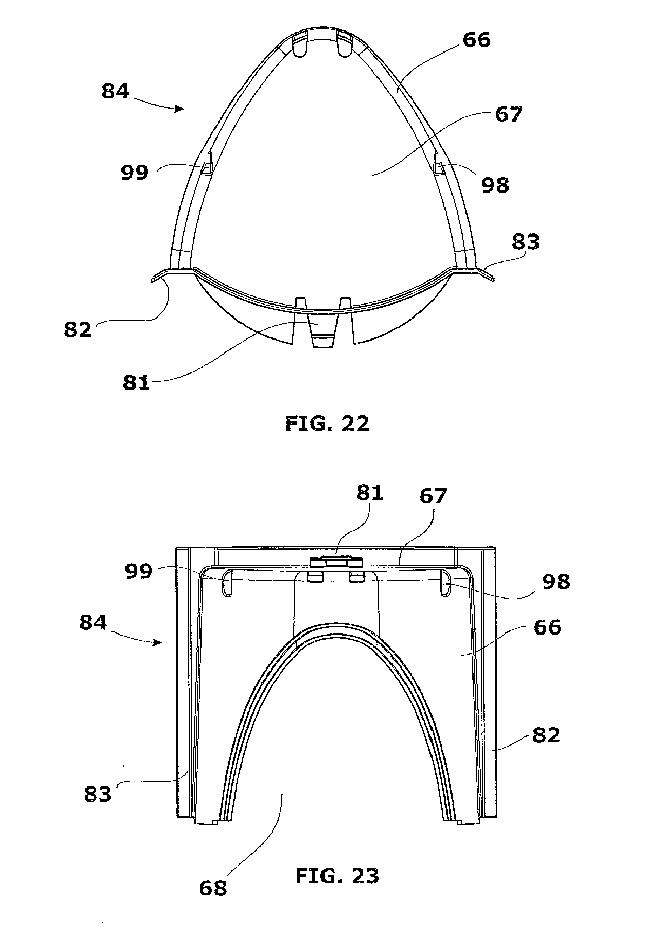

Figure 22 shows the presence of a snap lip 81.

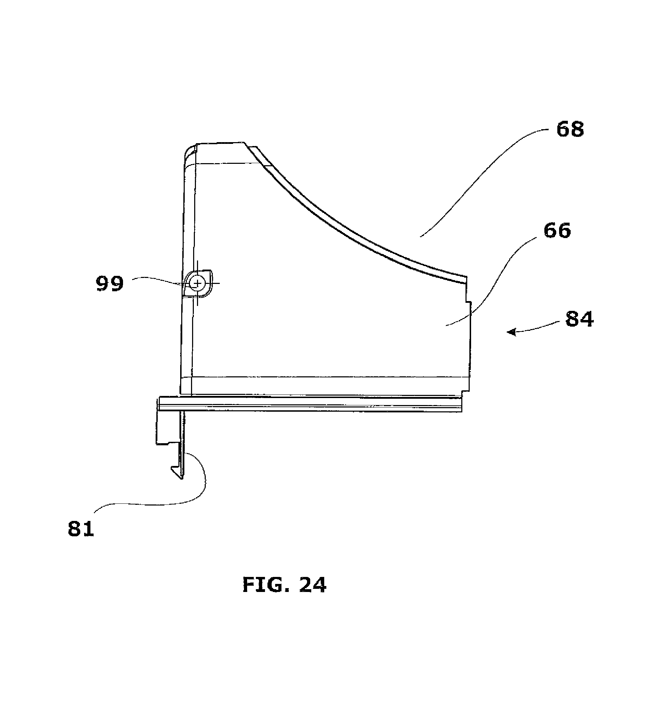

Figures 23 and 24 further clearly show the presence of ribs 82, 83 extending on the outer side.

For the purpose of guidance in possible dimensions of the nesting box according to the invention it is noted here that in a determined embodiment the overall height of the drawn unit amounts to 144 mm and the depth, so the horizontal dimension in the drawing, to 132 mm. The invention is not however limited to this dimensioning.

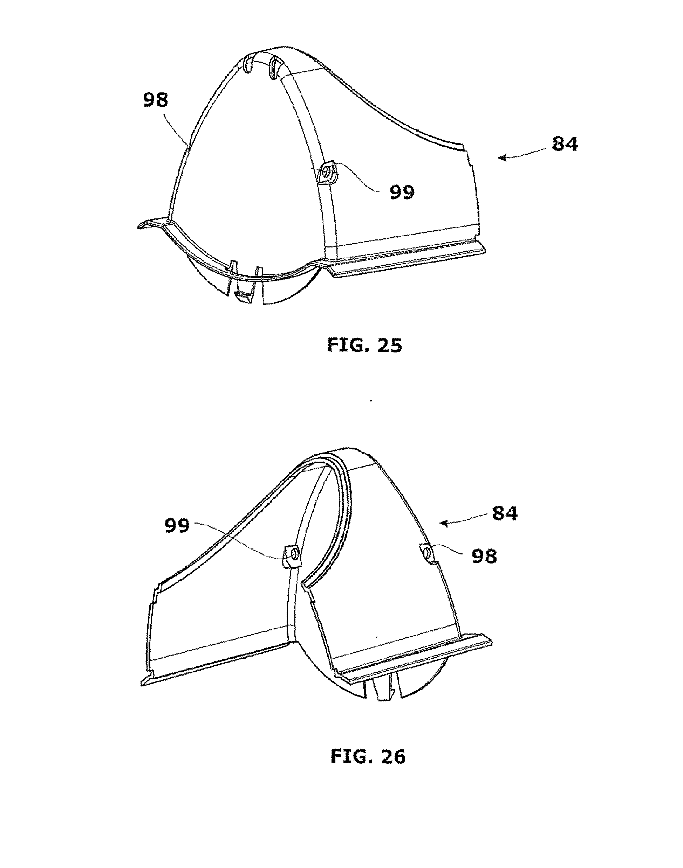

Figures 25 and 26 show clearly the overall structure of the unit 84 in question.

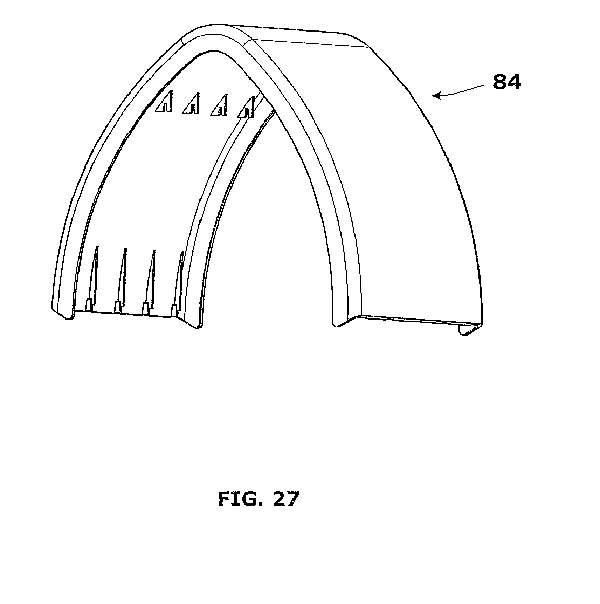

Figure 27 shows outer plate 84 of the roof. This is provided with various fixing and stiffening elements.

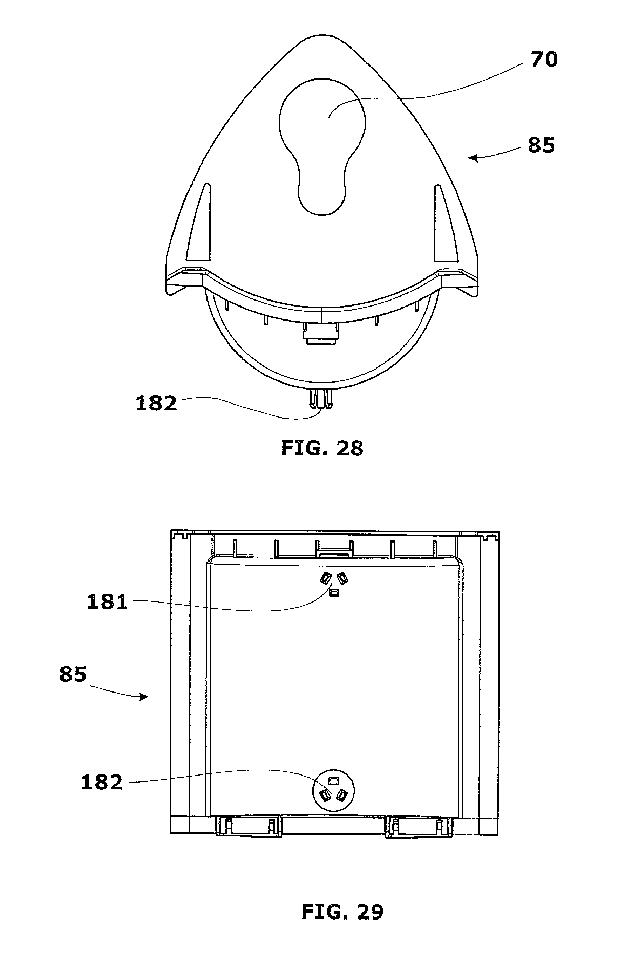

Figure 28 shows that drainage openings 181, 182 are tubular elements which comprise on their underside three resilient snap lips with snap edges.

It is also apparent that unit 85 comprises diverse strengthening and stiffening ribs.

The tubular snap elements 86, 87 serve for coupling to the outer plate of the bottom, which is provided for this purpose with continuous holes.

Attention is drawn to the fact that dimensions are shown in millimetres in a number of figures. This serves by way of orientation of the possible dimensioning of a nesting box for relatively small birds.

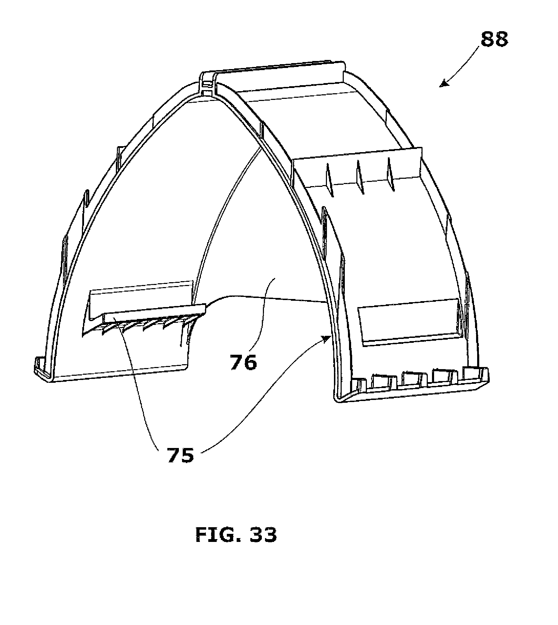

Figure 33 shows inner plate 88 of the roof with a number of stiffening ribs and sliding rib 75 over which sliding rib 89, 90 of the bottom can slide.

It is noted that longitudinal ribs 75 do not extend wholly as far as outer plate 76 but leave a certain free space relative thereto. In this free space a protruding end edge 91 can be accommodated on each of the sliding rib 89, 90 in the manner shown in figure 35 such that, when bottom 61 is slid inward by sliding end edges 91 over longitudinal ribs 75, the final locking is effected by end edges 91 moving over the rearmost edges of longitudinal ribs 75. The bottom can hereby only slide forward in the manner shown in figure 35 through intelligent human intervention, i.e. by lifting the rear part of the bottom a short distance. An effective and easily released locking is hereby realized.

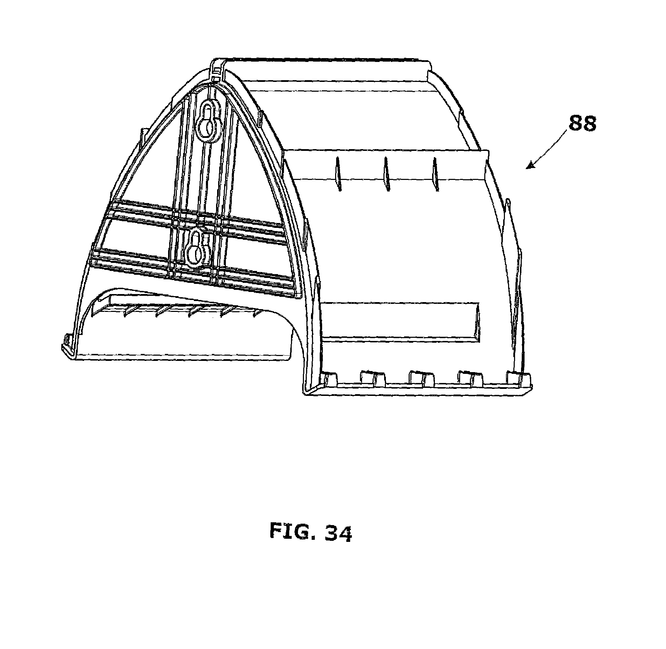

Figure 34 shows inner plate 88 of the roof with the rear wall from the rear.

Figures 1 and 35, among others, show clearly that at least the front wall of the nesting box has a shape corresponding to a vertical side view of an egg.

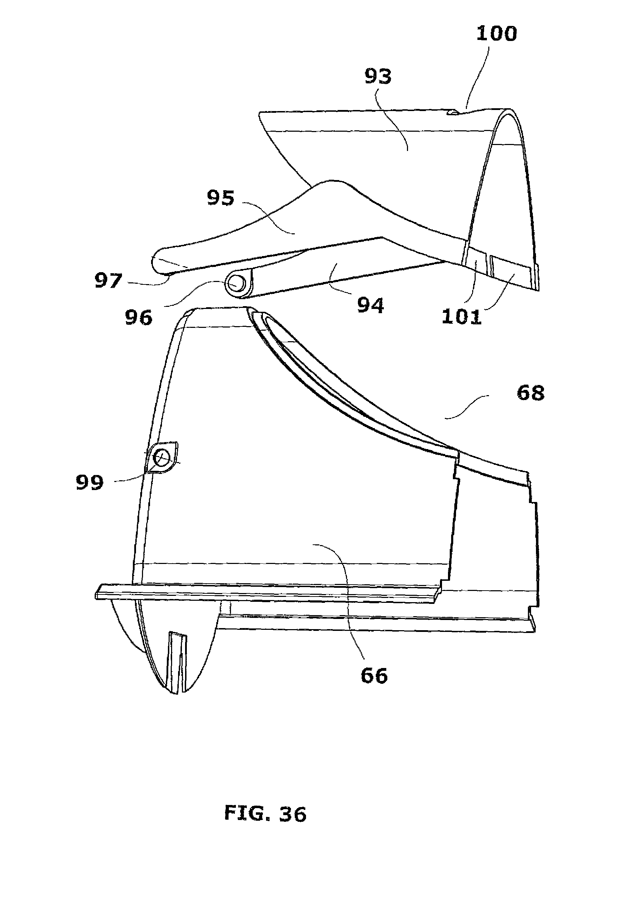

Figure 36 shows that a cover 93 can be added to the inner roof plate 66 with recess 68. Cover 93, which is manufactured from transparent plastic, has for this purpose two arms 94, 95 with inward directed protrusions 96, 97 respectively, which can be placed into holes 98, 99 in inner roof plate 66 so as to thus form a hinged joint.

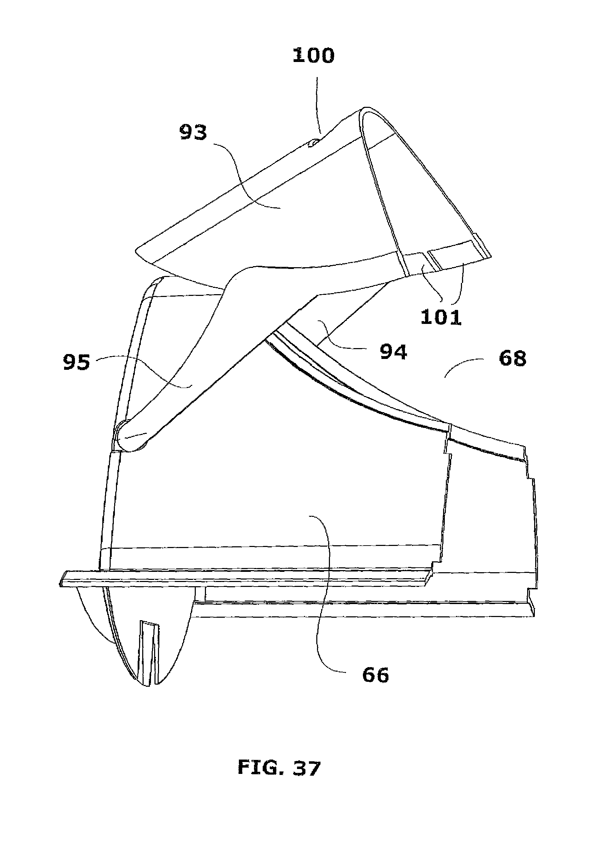

Figure 37 shows the assembled situation, wherein cover 93 is connected hingedly to the inner roof plate in that the protrusions 96, 97 engage in holes 98, 99 present in inner roof plate 66 under the influence of the spring force of the respective arms 94, 95. Attention is drawn to the fact that said holes 98 and 99 have already been shown in previously described figures, for instance figures 16, 22, 23, 24, 25, 26, 35.

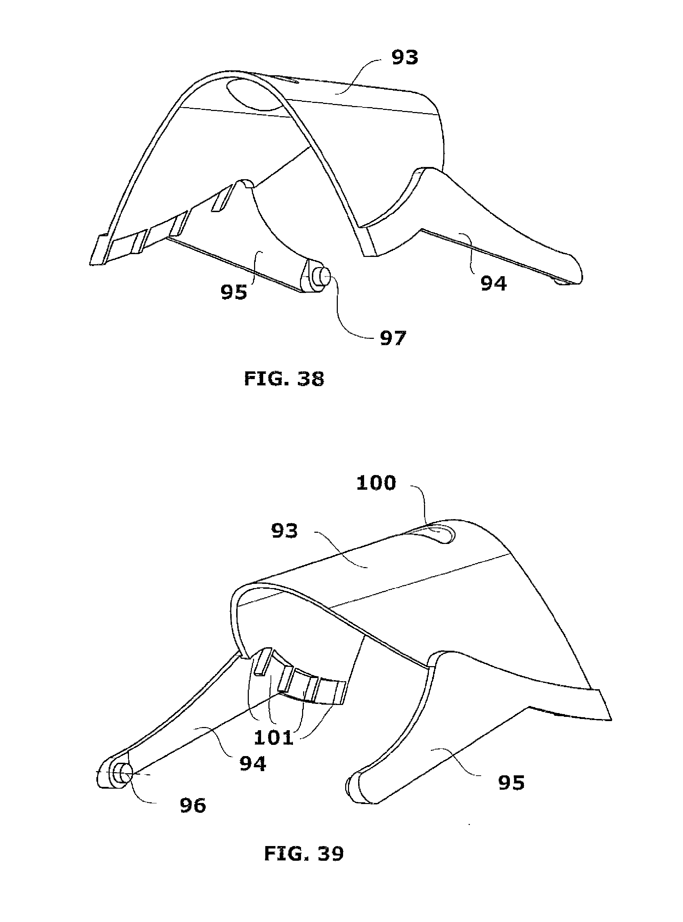

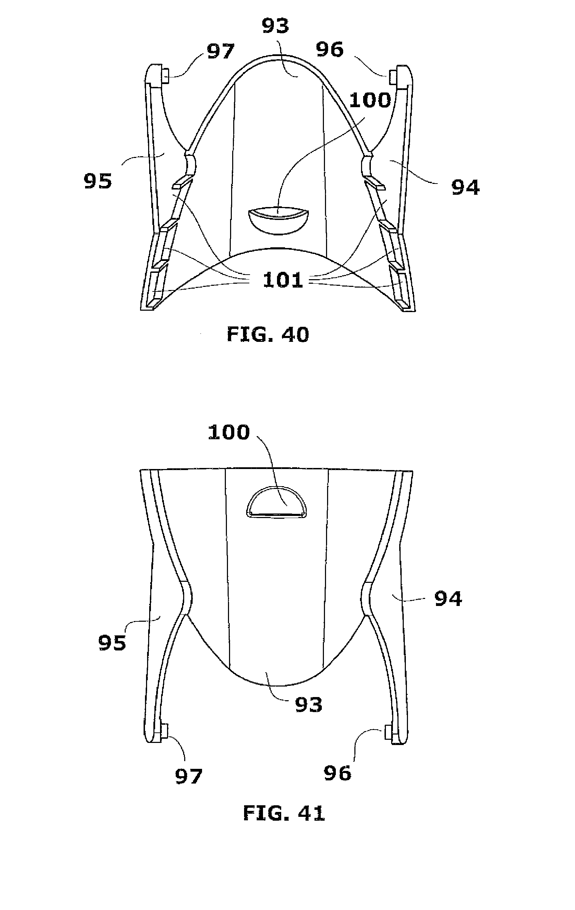

Figures 38, 39, 40 and 41 show the views of the cover defined in the foregoing. Cover 93 has a finger hole 100 whereby a user can easily open and close the cover. Figure 40 in particular shows clearly that this finger hole is partially covered on the underside.

The presence of ribs defining ventilation openings 101 is further noted with reference to figures 37, 38, 39 and 40.

## Claims

1. Nesting box for birds, comprising:
a front wall with an entrance aperture;
a rear wall;
a bottom;
a roof; and
mounting means for mounting the nesting box on a support construction;
which front wall has an opening with which one of a group of plate-like elements can selectively co-act, each of which elements has an entrance aperture with dimensions specific to a determined category of birds, which entrance apertures of the different elements have mutually differing dimensions and can thus allow passage of birds of differing dimensions;
**characterized in that**
a marking relating to the dimensions of the relevant entrance aperture is added at each entrance aperture; and
the opening in the front wall has a form such that, after a chosen element has been placed in position, the entrance aperture is free relative to the opening in the front wall and the marking is visible from the outside via the opening or via a second opening.

2. Nesting box as claimed in claim 1, wherein
the mounting means are arranged on the rear wall;
the rear wall supports the roof; and
the bottom and the front wall are supported for sliding in and out by the roof

3. Nesting box as claimed in claim 2, wherein the rear wall and the roof are assembled into an integral unit.

4. Nesting box as claimed in claim 2, wherein the bottom and the front wall are assembled into an integral unit.

5. Nesting box as claimed in claim 1, wherein the roof takes a double-walled form.

6. Nesting box as claimed in claim 1, wherein the front wall and/or the rear wall take a double-walled form.

7. Nesting box as claimed in claim 1, wherein the bottom and/or the roof have a prismatic form.

8. Nesting box as claimed in claim 7, wherein the bottom and/or the roof consist of plastic and are manufactured by extrusion.

9. Nesting box as claimed in claim 5, wherein the front edge and the rear edge of the roof are covered by respective edge trims.

10. Nesting box as claimed in any of the foregoing claims, wherein at least one of the front wall, the rear wall, the bottom and the roof are embodied in plastic.

11. Nesting box as claimed in claim 10, wherein at least the outer surfaces of the nesting box are embodied in plastic which is resistant to ultraviolet radiation.

12. Nesting box as claimed in claim 10, wherein the plastic is ASA.

13. Nesting box as claimed in claim 10, wherein the material thickness amounts to about (2.0 ± 0.5) mm.

14. Nesting box as claimed in claim 1, wherein the entrance aperture has a circular shape.

15. Nesting box as claimed in claim 1, wherein the entrance aperture has an oval shape.

16. Nesting box as claimed in claim 1, wherein the entrance apertures have maximum linear dimensions in the range of about 25-50 mm.

17. Nesting box as claimed in claim 16, comprising three elements, wherein said dimensions amount to 28 mm ± 10%, 35 mm ± 10% and 40 mm ± 10%.

18. Nesting box as claimed in claim 16, wherein a marking designates the maximum linear dimensions of the relevant entrance aperture.

19. Nesting box as claimed in claim 1, wherein a marking comprises a designation of the relevant category of birds.

20. Nesting box as claimed in claim 1, wherein at least a number of relevant components are mutually coupled by snap connections.

21. Nesting box as claimed in claim 1, wherein an outlet for rainwater connects to the bottom.

22. Nesting box as claimed in claim 1, wherein the inner surface of at least the bottom is smooth.

23. Nesting box as claimed in claim 1, wherein the rear wall and the roof are assembled into an integral roof unit, the bottom and the front wall are assembled into an integral bottom unit, and the bottom unit can be locked releasably relative to the roof unit.

24. Nesting box as claimed in claim 7, comprising a more or less rigid gauze mesh which connects to both side edges of the bottom and to the edge of the front wall extending thereabove, and which has a form corresponding to the form of the inner surface of the roof.

25. Nesting box as claimed in claim 7, wherein the rear wall supports an inner plate of the roof, this inner plate having on its front side a cut-away part through which a nesting box attendant can place a hand after sliding the bottom, the front wall and said inner plate forward a certain distance relative to the roof and the rear wall in order to access the interior of the nesting box.

26. Nesting box as claimed in claim 1, wherein the bottom comprises a feed dish and can thus serve as feeder board, wherein the front wall is omitted.

27. Nesting box as claimed in claim 1, wherein the mounting means comprise:
two mutually parallel vertical ribs on the outer surface of the rear wall; and
a mounting plate which extends over these ribs and which has at least one continuous hole, is connected to the rest of the rear wall with its horizontal bottom and top edges in the areas outside the ribs, wherein the area inside the ribs of at least the bottom edge is clear and defines a horizontal gap-like passage, and wherein the vertical side edges are clear and define two vertical gap-like passages.

28. Nesting box as claimed in claim 27, wherein the mounting plate forms part of the rear wall.

29. Nesting box as claimed in claim 1, wherein the mounting means comprise at least two holes which are located at a mutual distance and which each comprise a relatively wide lower part and a relatively narrow upper part, such that for instance the head of a screw can only pass through the wide part and the shank fits in the narrow part, and the nesting box can thus be supported by two screws.

30. Nesting box as claimed in claim 1, wherein at least a number of components of the nesting box are manufactured by injection moulding of plastic.

31. Nesting box as claimed in claim 1, wherein the front wall has a form corresponding with a vertical side view of an egg, wherein the lower zone is substantially bounded by a semicircle and the upper zone is substantially bounded by a semi-oval.

32. Nesting box as claimed in claim 1, wherein the elements are separate components, have the same outer dimensions and support means are added to the opening for supporting an element.

33. Nesting box as claimed in claim 1, wherein the elements are embodied together as one integral unit which is disposed rotatably relative to the front wall such that a nesting box attendant, by rotating the unit, can select an entrance aperture with the associated marking.

34. Nesting box as claimed in claim 25, wherein a cover hingedly coupled to the inner plate is added to the cut-away part, which cover can be lifted after sliding the bottom, the front wall and the inner plate forward over said certain distance.

35. Nesting box as claimed in claim 34, wherein the cover is at least partially transparent.
